Europäisches Patentamt

European Patent Office

Office européen des brevets

(11) Publication number: **0 034 411**
**A2**

(12) # EUROPEAN PATENT APPLICATION

(21) Application number: **81300277.1**

(22) Date of filing: **22.01.81**

(51) Int. Cl.³: **F 16 H 3/08**

(30) Priority: **18.02.80 GB 8005375**

(43) Date of publication of application:
**26.08.81 Bulletin 81 34**

(84) Designated Contracting States:
**AT BE DE FR GB IT NL SE**

(71) Applicant: **AUTOMOTIVE PRODUCTS LIMITED**
**Tachbrook Road**
**Leamington Spa Warwickshire CV31 3ER(GB)**

(72) Inventor: **Jarvis, Roger Porter**
**87 Lime Avenue Lillington**
**Leamington Spa Warwickshire, CV32 7DG(GB)**

(72) Inventor: **Webster, Henry George**
**The Old School House Barrowfield Lane**
**Kenilworth Warwickshire, CV8 1EP(GB)**

(54) **Rotary transmission.**

(57) A rotary power transmission has gear trains (eg. 17,24 22,27) each being one of a set providing a series of increasing speed ratios, and two clutches (14,33) independently operable and providing alternative drive paths through the gear trains between a common input (11) and a common output (12), the gear trains of alternate ratios in the set being driven through one and the other clutch; a driving shaft from the input (11) carries a gear wheel (17) of the lowest forward speed ratio and passes through a hollow driving shaft (16) for a gear wheel (22) of the next foward speed ratio in the set.

FIG.1.

-1-

## "Rotary Transmission"

This invention relates to rotary transmissions of the dual clutch kind by which is meant a transmission having gear trains each being one of a set providing a series of increasing speed ratios, and two clutches independently operable and providing alternative drive paths through the gear trains between a common input and a common output, the gear trains of alternate speed ratios in the set being driven respectively through one and the other clutch.

The invention is particularly though not exclusively applicable to drive transmissions for motor vehicles.

Examples of transmissions of the dual clutch kind are shown in British Patent Specification Nos. 145,827 (Bramley-Moore), 585,716 (Kegresse), 795,260 (David Brown) and 1,125,267 (Bosch). To the best of our knowledge, none of these prior proposals has been commercially adopted.

A particular advantage of transmissions of the dual clutch kind is that they are derived from conventional single clutch manual-change transmissions with which they can share many component parts.

It is a feature of transmissions of the dual clutch kind that two drive inputs to the transmission must be provided. It has been proposed in a two shaft transmission layout (our British Patent Application No. 80.304160) to utilise a concentric drive shaft arrangement having hollow output shafts from each respective clutch about an input shaft, the input gears of each speed ratio being mounted on the hollow shaft. One problem with such an arrangement is that where first speed ratio input gear needs to be relatively small in diameter to obtain the necessary reduction ratio, the use of a hollow clutch output shaft makes it difficult to provide sufficient material to achieve the necessary strength. This problem applies also to the provision of reverse speed ratio.

The present invention provides a transmission of the dual clutch kind which overcomes the aforementioned problem.

According to the invention there is provided a rotary power transmission having gear trains each being one of a set providing a series of increasing speed ratios, and two clutches independently operable and providing alternative drive paths through the gear trains between a common input and a common output, the gear trains of alternate ratios in the set being driven respectively through one and the other clutch characterised thereby that a driving shaft from said input and carrying a gear wheel of the gear train of a lowest forward speed ratio passes through a hollow driving shaft from said input and carrying a gear wheel of the gear train of the next forward speed ratio in the set.

Preferably said gear wheel of the gear train of a lowest forward speed ratio is carried in driving relationship by said driving shaft.

In a preferred embodiment said gear wheel of the gear train of said next forward speed ratio is carried in driving relationship by said hollow driving shaft.

Other features of the invention are included in the following description of two preferred embodiments shown, by way of example only, in the accompanying drawings in which:-

Fig. 1 is a diagrammatic transverse section through the first embodiment of the invention in the form of a five speed transmission assembly for a motor vehicle; and

Fig. 2 is a diagrammatic transverse section through the second embodiment of the invention in the form of a five speed transmission assembly for a motor vehicle.

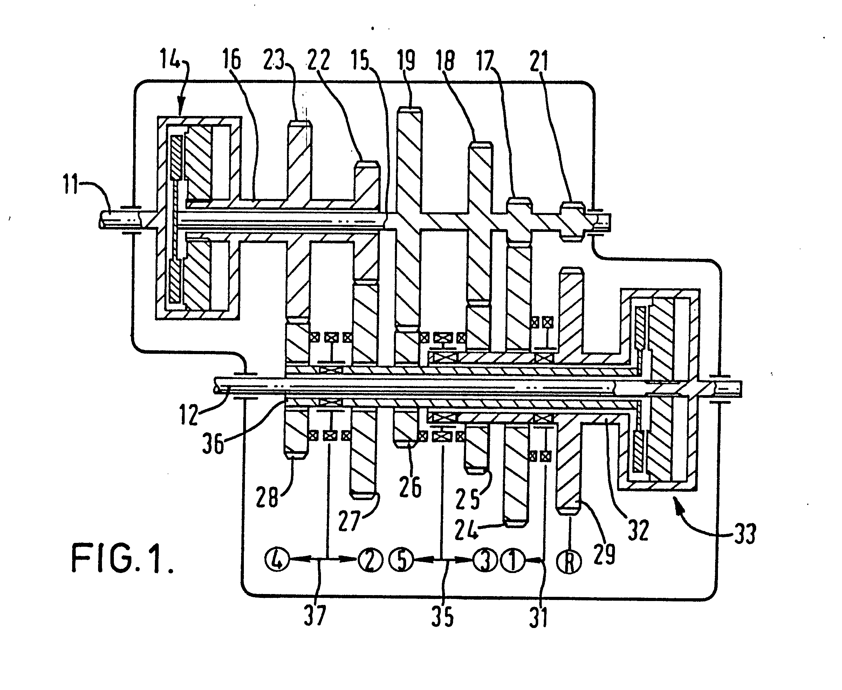

Referring to Fig. 1, there is shown an input shaft 11 for connection to an engine crankshaft and an output shaft 12 for connection to the differential assembly of the vehicle drive, both supported for rotation in a transmission casing 13. Mounted on the input shaft 11 is a primary clutch assembly 14 whose driven plate is connected to a driving shaft 15. The driving shaft 15 passes through another, hollow, driving shaft 16 which is driven directly by a driving member of the primary clutch 14, for example in a manner

shown and described in British Patent Specification No. 1,112,321.

Mounted fast on the driving shaft 15 are four input gear wheels 17, 18, 19 and 21 for the first, third, fifth and reverse speed ratios respectively and mounted fast on the hollow driving shaft 16 are two input gear wheels 22 and 23 for the second and fourth speed ratios respectively. The forward input gear wheels 17, 18, 19, 22 and 23 are in constant mesh with output gear wheels 24, 25, 26, 27 and 28 respectively, the output gear wheels being journalled for individual rotation on respective supporting shafts to be described hereafter.

A reverse output gear wheel 29 is meshed to the input gear wheel 21 when reverse is selected by a reverse idler pinion (not shown) in a known manner. Other suitable means for obtaining reverse ratio are possible.

Synchroniser assembly 31 is for connecting first speed output gear wheel 29 to a hollow shaft 32 which is connected to the output member of a secondary clutch 33 and to the transmission output shaft 12. Sharing this same torque path are the third and fifth speed output pinions 25 and 26 which are connectable to the hollow shaft 32 by a synchroniser assembly 35.

The driving member of the secondary clutch 33 is connected to another hollow shaft 36 which is co-axial with shafts 32 and 34 and has the second and fourth speed output gear wheels 27 and 28 mounted thereon.  Shaft 36 may be driven by gear wheels 27 and 28 by a synchroniser assembly 37.

It is intended that automatic speed ratio selection would be effected using known automatic transmission control technology as described for example in "Torque Converters or Transmissions" by P.M. Heldt and published by Chilton.

The synchroniser assemblies 31, 35 and 37 maybe shifted hydraulically under the control of an automatic gearbox and clutch control mechanism which signals selection of a particular gear train in response to changes in parameters such as vehicle speed and accelerator pedal position and operates clutches 14 and 33.  In neutral the synchroniser assemblies are disengaged and no drive is transmitted.  According to the detail design of the control mechanism, clutches 14 and 33 may be engaged or disengaged at this stage. The transmission would be provided with a selector lever having the usual DRIVE NEUTRAL and REVERSE positions.

Operation of the transmission is as follows:-

When DRIVE is selected by the driver the control mechanism selects the first speed ratio by disengaging both clutches 14 and 33 (if previously engaged) and shifting synchroniser assembly 31 to couple the first speed output gear wheel 24 to shaft 32. Operation of the driver's accelerator pedal to speed up the engine causes the primary clutch 14 to be engaged under the control of the control mechanism to transmit drive through the gear train of gear wheels 17 and 24, through synchroniser assembly 31 onto shaft 32 and thence to the output shaft 12. Conveniently the secondary clutch 33 is engaged at the same time as the first speed ratio is selected so that synchroniser assembly 37 rotates in the same direction as the second speed output gear wheel 27 with a relatively small speed difference. This eases the work load on the synchroniser assembly for the change into second speed ratio, which follows the sequence:- (1) Disengage the secondary clutch 33; (2) Engage the second speed output gear wheel 28 with shaft 36 by shifting synchroniser assembly 37; (3) Disengage the primary clutch 14 at the same time as engaging the secondary clutch 33; (4) Disengage the first speed output gear wheel 24 from shaft 32 by shifting synchroniser assembly 31; (5) Engage the primary clutch 14. The drive is now through hollow shaft 16, the second speed gear train comprising gear wheels 22 and 27, hollow shaft 36, the secondary clutch 33 and output shaft 12.

Thus the transmission automatic control is arranged to pre-select the next required speed ratio is sequence, the ratio change being made at the appropriate moment by changing drive progressively from one clutch to the other.

Other speed ratio up-changes and the speed ratio down-changes all take place in a similar manner to that just described.

It is not intended that the secondary clutch 33 be used for drive take-up from rest. As a result the required capacity of the clutch 33 is much reduced and it can be of small size when compared with the primary clutch 14.

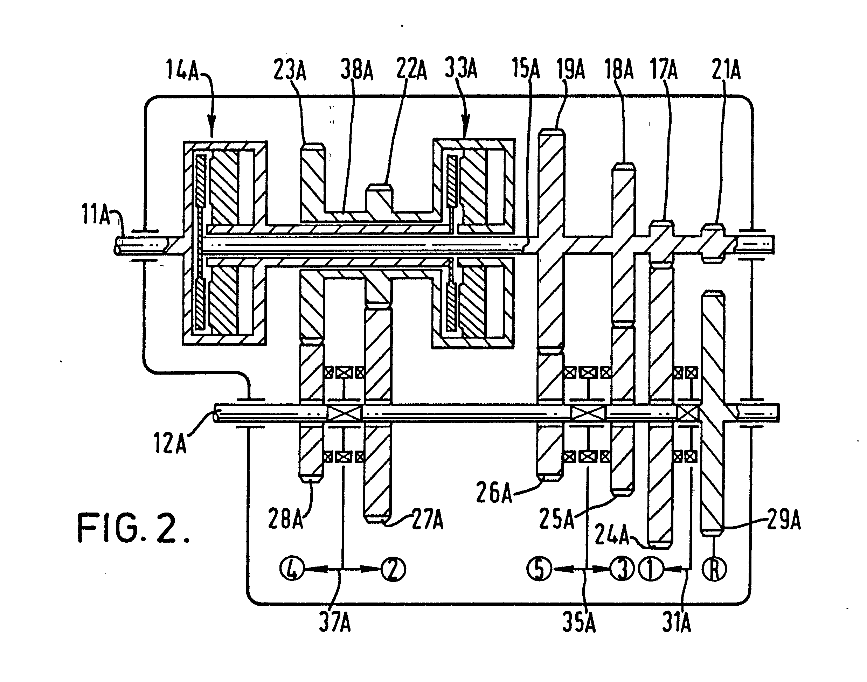

In the transmission shown in Fig. 2 the input shaft 11A, output shaft 12A, primary clutch 14A, driving shaft 15A and the first, third, fifth and reverse speed input gear wheels 17A, 18A, 19A and 21A are all similar to the corresponding components described above with reference to Fig. 1. However, the secondary clutch 33A has its driving member connected to the hollow input shaft 16A and its output member drives another hollow shaft 38A on which are mounted the second and fourth speed input gear wheels 22A and 23A. The output gear wheels 24A, 25A, 26A, 27A and 28A are now supported by the output shaft 12A, as are the synchroniser assemblies 31A, 35A and 37A.

Operation of the transmission shown in Fig. 2 is the same as that described above for the transmission shown in Fig. 1. However, for the sake of clarity the torque path for the first and second speed ratios will now be described. In the first speed ratio, the drive is taken through the driven plate of the primary clutch 14A and shaft 15A to the first speed gear train comprising gear wheels 17A and 24A and through synchroniser assembly 31A to the output shaft 12A. In the second speed ratio the drive is taken through the hollow input shaft 16A, the secondary clutch 33A, hollow shaft 38A, the second speed gear train, comprising gear wheels 22A and 27A, and the output shaft 12A.

Both the transmission shown in Figs. 1 and 2 enable the primary clutch 14 or 14A to drive through a solid shaft 15 or 15A to the input gear wheel 17 or 17A of the lowest speed ratio, the input gear wheel 22 or 22A of the adjacent ratio being driven through a hollow shaft 16 or 16A through which the solid shaft passes. Thus the first speed input gear wheel 17 or 17A does not have to be mounted on a hollow shaft, the reverse input gear wheel 21 or 21A benefitting in the same manner.

Although the transmission has been described with the driving gear wheels of the gear train being fixed for rotating with a respective driving shaft, it is possible for any or all of the relatively rotatable gear wheels and synchroniser assemblies to be arranged on the driving shafts and have the driven gear wheels fixed for rotation with the output shaft.

Claims

1.      A rotary power transmission having gear trains each being one of a set providing a series of increasing speed ratios, and two clutches (14,33) independently operable and providing alternative drive paths through the gear trains between a common input (11) and a common output (12), the gear trains of alternate ratios in the set being driven respectively through one and the other clutch, characterised thereby that a driving shaft from said input and carrying a gear wheel (17) of the gear train (17,24) of a lowest forward speed ratio passes through a hollow driving shaft (16) from said input (11) and a carrying gear wheel (22) of the gear train (22,27) of the next forward speed ratio in the set.

2.      A transmission according to Claim 1, characterised thereby that said gear wheel (17) of the gear train (17,24) of a lowest forward speed ratio is carried in driving relationship by said driving shaft (11).

3.      A transmission according to Claim 1, characterised thereby that a gear wheel (21) of a gear train for reverse speed ratio is carried by the driving shaft of the lowest forward speed ratio.

4.     A transmission according to Claim 3, characterised thereby that a gear wheel (21) of the gear train of reverse speed ratio is carried in driving relationship by the driving shaft of the lowest forward speed ratio.

5.     A transmision according to any preceding claim, characterised thereby that said gear wheel (22) of the gear train (22,27) of said next forward speed ratio is carried in driving relationship by said hollow driving shaft (16).

6.     A transmission according to any preceding claim, characterised thereby that both clutches (14,33) precede at least one respective gear train of a speed ratio between said input (11) and said output (12).

7.     A transmission according to any preceding claim, characterised thereby that the clutches (14,33) are co-axial.

FIG.1.

FIG. 2.